Europäisches Patentamt

European Patent Office

Office européen des brevets

(11) Publication number: **0 271 224**
**A1**

# (12) EUROPEAN PATENT APPLICATION

(21) Application number: **87309995.6**

(22) Date of filing: **12.11.87**

(51) Int. Cl.4: **B01D 53/34**

(30) Priority: **17.11.86 DK 5478/86**

(43) Date of publication of application:
**15.06.88 Bulletin 88/24**

(84) Designated Contracting States:
**AT DE ES FR GB GR IT NL SE**

(71) Applicant: **A/S NIRO ATOMIZER**
**No. 305 Gladsaxevej**
**DK-2860 Soeborg(DK)**

(72) Inventor: **Jons, Ebbe Skyum**
**Skovmose Alle 52A**
**DK-3500 Vaerlose(DK)**
Inventor: **Nielsen, Kirsten Kragh**
**Ornebakken 50**
**DK-2840 Holte(DK)**
Inventor: **Felsvang, Karsten Stig**
**Sortemosen 14**
**DK-3450 Allerod(DK)**
Inventor: **Rasmussen, Stig**
**Kogevejen 23**
**DK-4621 Gadstrup(DK)**

(74) Representative: **Wilkinson, Stephen John et al**
**c/o Stevens, Hewlett & Perkins 5 Quality**
**Court Chancery Lane**
**London WC2A 1HZ(GB)**

(54) **A spray drying absorption process for the desulfurization of a stream of hot flue gas.**

(57) The efficiency of a spray drying absorption process using a limestone suspension as absorbent for sulfur dioxide in flue gas is substantially enhanced by incorporating a plastic clay in the limestone suspension in an amount of 2-15% by weight based on limestone. A substantial absorption takes place in a baghouse in which entrained particulate material resulting from the spray drying is deposited on the filter surfaces while having a moisture content of 3-10%. The clay promotes the oxidation of sulfur dioxide or calcium sulfite into sulfate by an exothermic process providing a desired drying of the particulate material on the baghouse filter surface and reheating of the flue gas passing the baghouse.

EP 0 271 224 A1

A spray drying absorption process for the desulfurization of a stream of hot flue gas.

BACKGROUND OF THE INVENTION.

The present invention deals with a spray drying absorption process for the desulfurization of a stream of hot flue gas using limestone as absorbent.

Throughout most of the industrialized world legislation necessitates desulfurization of flue gas from power plants burning sulfur-containing coal or oil.

Currently desulfurization of flue gas from power plants is primarily performed either as a wet scrubbing using limestone as absorbent or as a spray drying absorption using lime as absorbent.

In the present specification and claims the word "limestone" is used as covering any form of calcium carbonate ($CaCO_3$) including e.g. chalk, whereas the term "lime" is used as covering any form of calcium hydroxide ($Ca(OH_2)$). Both types of materials may contain the impurities with which they are conventionally recovered or marketed. Thus the materials may comprise a substantial amount of magnesium carbonate or magnesium hydroxide, resp.

Spray drying absorption has certain advantages over wet scrubbing because construction and operation of plants for spray drying absorption are less complicated, and furthermore it is an advantage that the spray drying absorption produces a dry waste and requires a minimum or no flue gas reheating, while a wet scrubbing process requires dewatering of the produced sludge and consumes energy for reheating the flue gas leaving the scrubber.

In spite of said advantages spray drying absorption has still not achieved a dominating position in the field of desulfurization of flue gas from power plants burning fuel of high sulfur content.

This is mainly due to the fact that the cost of the lime absorbent in the spray drying absorption pro-

cesses is considerable, especially when the desulfurization process is used in connection with the combustion
of high sulfur coal or oil.

A further drawback of the prior art lime spray
drying absorption processes is the fact that the resulting waste product contains the main part of the absorbed
sulfur compounds in the form of calcium sulfite which
with a view to industrial use or disposal of the waste
product usually has to be oxidized into calcium sulfate
in a separate process.

Since the costs of lime are several times higher
than the costs of limestone, it has, of course, been
suggested to substitute limestone for lime in the spray
drying absorption process.

However atempts to this effect have hitherto not
been succesfull in desulfurization processes.

In published German patent application 2 846 297
it is disclosed that an efficient absorption of hydrogen
chloride from incinerator waste gas may be obtained by
using e.g. calcium carbonate as absorbent. However, the
affinity of $SO_2$ towards limestone is substantial less
than the affinity of HCl towards limestone, and the results hitherto obtained with desulfurization by spray
drying absorption processes using limestone absorbent
has not been satisfactory, when performed in conventional spray drying absorption installations.

Published European patent application 128 698
discloses a process in which limestome is used as
absorbent for sulfur dioxide in flue gas in which process a very efficient contact between a flue gas and limestone absorbent is obtained by using an absorption
chamber, in which the spray drying step takes place over
a fluidized particle layer maintained in the bottom of
the spray drying chamber.

However, it is an object of the invention to provide a process using limestone as absorbent which pro-

3

cess may be performed using a plant of the type conventional for spray drying absorption with lime absorbent.

Said conventional plants comprise a spray drying absorption chamber connected to a baghouse filter on the filter surface of which a layer of particulate material formed in the chamber accumulates, through which layer flue gas passes in intimate contact with the particulate material containing non-reacted absorbent.

When powdery limestone is substituted for lime in such a process it has turned out that it is difficult to build up and maintain a layer of partly reacted limestone particles on the filter surfaces in the baghouse since much of the powder entrained into to the baghouse by the gas stream from the spray absorption chamber falls down on the bottom of the baghouse where contact with the flue gas is very limited or collects on horizontal surfaces in the baghouse and in the ducts, thereby creating operational problems causing frequent interuptions of the process.

This lacking ability of the partly reacted limestone absorbent to form a layer on filter surfaces suitable for further contact with flue gas apparently is one of the reasons why substitution of limestone for lime in conventional spray drying absorption desulfurization processes does not result in a satisfactory removal of $SO_2$ unless unacceptable high amounts of limestone absorbent are used.

## SUMMARY OF THE INVENTION.

We have now found that by incorporating a minor amount of plastic clay in the limestone suspension used as feed for the spray drying absorber changes are obtained as to the physical structure and properties of the particulate material formed in the spray drying absorption reaction, which changes make the performance of limestone in the spray drying absorption process more akin to the performance of lime in such a process.

4

When e.g. 10 percent by weight (based on limestone) of plastic clay was added to the limestone suspension the tendency of the powder formed in the spray drying absorption process to fall down from the filter surfaces and, although it seems contradictory thereto, also the tendency to stick to the walls of baghouse and ducts is reduced. Moreover it was observed that with the same saturation approach temperature (i.e. the difference between the actual temperature and the adiabatic saturation temperatur) of the gas leaving the spray dryer, the moisture content of the powder was reduced. This means that clay addition makes it possible to operate the process with lower approach temperature than would otherwise have been possible.

These effects of clay addition result in a substantial improvement of the efficiency of the total desulfurization process in term of absorbed sulfur dioxide when using an unaltered ratio between limestone and sulfur dioxide.

In a conventional spray drying absorption desulfurization process the waste product consists of a powder which besides non-reacted absorbent contains calcium sulfite and calcium sulfate, since a certain oxidation takes place during or after the absorption of sulfur dioxide.

Where the waste product has to be used as a substitute for gypsum or has to be deposited in nature it is desired to convert the sulfite into sulfate and several processes have been suggested for this purpose.

However, it has turned out that the addition of clay to the limestone absorbent drastically increases the ratio sulfate/sulfite in the waste product to such an extent that for certain application of the waste product it may be possible to omit the oxidation pretreatment hitherto regarded as mandatory.

Thus the process according to the invention includes the steps of

5

a) preparing an aqueous feed-suspension containing powdery limestone ($Ca(CO_3)$),

b) atomizing said feed suspension into the stream of hot flue gas in a spray drying absorption chamber for partial drying of the resulting atomized droplets and absorption of a portion of the sulfur dioxide in the flue gas by the limestone, thereby forming particles comprising partly reacted limestone,

c) conducting the flue gas stream with a substantial part of said particles entrained therein to a filter to remove said particles from the flue gas stream and to build up a layer of said particles on the filter surface, thereby exposing them to further contact with flue gas passing through the filter,

d) intermittently removing said layer of particles from the filter surface, and

e) withdrawing from the filter the treated gas having a substantially reduced content of sulfur dioxide ,

and the new and inventive feature comprises

f) incorporation of plastic clay in said aqueous feed suspension in an amount of 2-15% by weight based on limestone,

g) adjusting the amount of water in the feed suspension to ensure that said particles when reaching the baghouse filter have a moisture contents of 3-10% by weight, and

h) maintaining the particle layer on the filter surface for further absorption of sulfur dioxide and oxidation of sulfur compounds having the sulfur of oxidation number 4 into sulfate by an exothermic reaction, thereby increasing the temperature of the particle layer to evaporate a substantial part of the moisture therein and in-

creasing the temperature of the flue gas passing through the particle layer.

In the present specification and in the attached claims "plastic clay" denotes clay containing considerable amounts of one or more of the following clay mineral groups: kaolinite, illite, smectite and vermiculite.

The efficiency of the plastic clays has been found to be correlated with the specific surface area as determined by BET. Effective performance is obtained with plastic clays having a BET surface larger than 30 $m^2/g$.

The catalytic effect of the clay added to the limestone absorbent suspension does not only manifest itself in a substantial increase of the sulfate/sulfite ratio in the spent absorbent recovered as waste product from the baghouse. It is also said catalytic effect which enables operation of the process as specified in paragraph g) and h) above. The heat liberated by the oxidation of sulfur compounds having the sulfur of oxidation number 4 (i.e. sulfur dioxide and/or sulfite) into sulfate causes a substantial drying of the moist particles collected on the filter surface. Without such a drying enabled by the exothermic reaction the particles would remain moist and operational problems would make the removal of the particles difficult. However, a high moisture content in the limestone particles during a part of their residence time on the filter surface is important to achieve an acceptable reaction between the limestone and sulfur dioxide, and consequently the catalytic effect of the clay enhances the efficiency of the process not only by producing an oxidized waste material but also by increasing the sulfur dioxide absorption obtained by a certain limestone/$SO_2$ ratio.

The catalytic activity of the clay has not been studyed in more details. Thus it has not been investi-

gated whether the catalyzed oxidation takes place between oxygen in the flue gas and sulfur dioxide therein by contact with the clay or whether the sulfur dioxide initially reacts with limestone to form calcium sulfite which is thereupon oxidized by the flue gas oxygen.

Due to the rise of temperature caused by the oxidation on the filter surface it is possible to let the particles reach the filter with the above stated high moisture content of 3-10 percent by weight while entrained in the gas stream leaving the spray drying absorber at a temperature of 6-15°C above the adiabatic saturation temperature, and still let the cleaned flue gas leave the filter at a temperature well above the adiabatic saturation temperature thereof, e.g. 10-20°C above said saturation temperature. When the particles are removed from the filter they are substantially dry which means that their water content does not exceed 2% by weight, and is typical 0,5% by weight.

Addition of clay to the limestone feed suspension results in the formation of less sticky particles in the spray absorption process.

Examination of the particles by electronic microscopy reveals that the size of the particle clusters formed is increased by the clay addition, and they resemble the clusters formed in spray absorption processes using lime absorbent, which may be an explanation of the fact that the clay addition changes the performances of limestone in the process towards the performances experienced with lime absorbent, as explained above.

Since the reactivity of an insoluble absorbent such as limestone is obviously dependent on the available surface area thereof, it is preferred to use a finely divided material. Preferably at least 50 weight-% thereof should have a particle size less than 7 μm.

To improve the reaction between sulfur dioxide and limestone it is preferred to incorporate a deliques-

8

cent compound such as an alkali or alkaline earth chloride in the feed suspension to be atomized. This may be done in an expedient and costless way by using sea water for the preparation of the feed suspension.

In case it is necessary to remove a very high percentage of the sulfur dioxide present in the flue gas it is preferred to incorporate also lime in the limestone feed suspension.

To minimise the consumption of absorbent limestone it is preferred to recycle a part of the spent absorbent recovered from the baghouse or from the bottom of the spray drying absorption chamber to the feed suspension.

BRIEF DESCRIPTION OF THE DRAWINGS.

The process according to the invention is illustrated further in the following with reference to the drawing where

Fig. 1 is a simplified flow sheet of the a preferred embodiment of the process according to the invention,

Fig. 2 is an X-ray diffractogram of a spent absorbent from a comparison desulfurization process using limestone absorbent without clay addition,

Fig. 3 is a X-ray diffractogram of a spent absorbent produced by the method according to the invention,

Fig. 4 and Fig. 5 are electron micrographs of the material corresponding to the X-ray diffractogram depicted in Fig. 2, and

Fig. 6 and Fig. 7 are electron micrographs of material corresponding to the X-ray diffractogram depicted in Fig. 3.

9

## DESCRIPTION OF THE PREFERRED EMBODIMENTS.

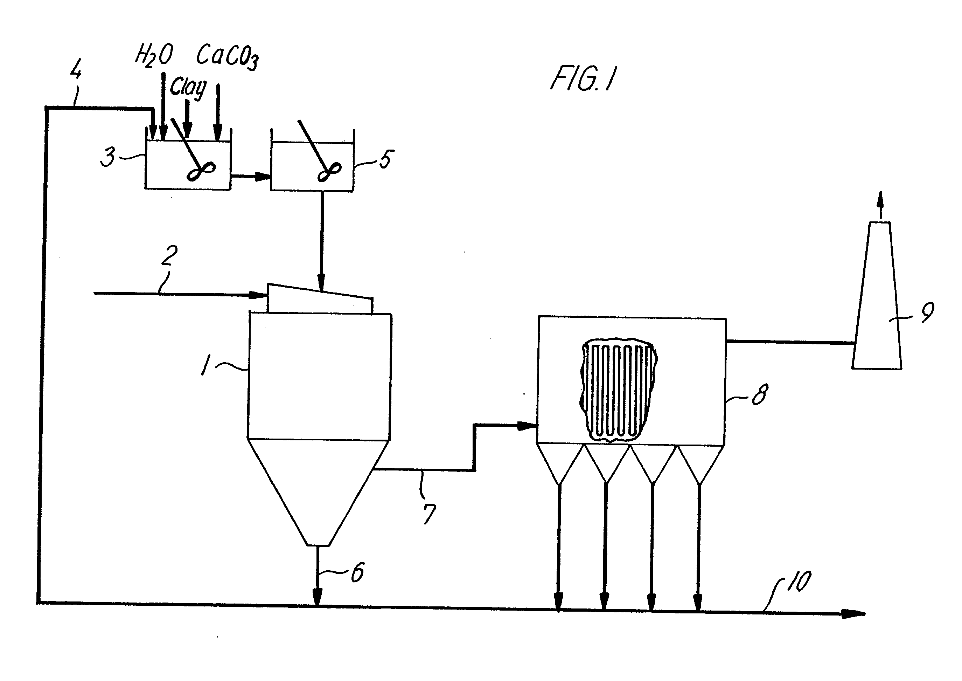

In Fig. 1 a spray drying absorption chamber is indicated with the numeral 1 to which chamber a hot stream of sulfur dioxide-containing flue gas is conducted through a duct 2.

3 represents a mixing tank for feed preparation to which tank are added water, e.g. in the form of sea water, limestone and clay, and recycled spent absorbent is introduced through conduit 4. It is preferred to recycle spent absorbent in an amount resulting in a solids content in the feed suspension of 50-60%.

The suspension thus prepared is conducted to a feed tank 5 from where it is pumped to an atomizer in the chamber 1.

Due to the high solids content of the feed the atomization is preferably performed by use of a rotary atomizer. Because of the contents of abrasive particles in the feed suspension it is preferred to use an atomizer wheel having wear resisting bushings.

The stoichiometric ratio between limestone used in the process and sulfur dioxide in the flue gas introduced in duct 2 will typically be appr. 1.5.

In the spray drying absorption chamber the atomized droplets of limestone-containing feed are dried to a powder and simultaneously a substantial amount of the sulfur dioxide in the flue gas is absorbed.

Coarse particles and a minor amount of material deposited on the chamber walls fall down into the bottom part of the spray drying absorption chamber from where recovering takes place through conduit 6.

However, most of the powdery material formed in the spray drying absorption chamber remains suspended in the gas and is withdrawn entrained therein from the chamber through conduit 7 to a baghouse 8.

The baghouse 8 may be of any conventional type having means for intermittent removal of the particles which collect on the filter surface.

10

The amount of water added to the mixing tank 3 is adjusted dependent on the amount and temperature of the flue gas to be treated to obtain a moisture content of the particles reaching the baghouse of 3-10 percent by weight. Operating with this relative high moisture content is only possible due to the clay addition according to the invention.

In the spray drying chamber, and in the layer of particles formed on the filter surfaces in the baghouse 8 the clay catalyses an oxidation by which sulfur compounds having the sulfur of oxidation number 4, viz. sulfur dioxide and/or sulfite, reacts with the oxygen in the flue gas and calcium sulfate is formed.

The catalytic activity of the clay in this respect is so pronounced that said oxidation is almost completed during the process, which is reflected by the fact that a typical analysis of spent absorbent recovered from the baghouse 8 shows 20-40 percent calcium sulfate and less than 3% calcium sulfite. If no clay is added to the absorbent feed a typical analysis of the spent absorbent would show a higher proportion of calcium sulfite than of calcium sulfate.

The oxidation commences in the spray drying absorption chamber and continues in the layer formed of partly spent absorbent on the filter surfaces in the baghouse 8.

As explained above the oxidation is an exotermic reaction for which reason the temperature of the powder layer on the filter surface and of the gas stream passing through the layer is increased several degrees Celcius, and consequently the particles in the layer are dried to a moisture content below 2% and the gas is heated at a temperature well above the adiabatic saturation temperature thereof, e.g. 10-20°C above said saturation temperature. Thereby reheating of the gas stream before releasing thereof into the atmosphere through a stack 9 may be avoided or reduced.

11

As demonstrated in the Example below the sulfur dioxide contents of the gas released will be substantially less than if a similar process were carried out without clay addition and with the adjustment of temperatures necessary for operation without clay addition.

A part of the spent absorbent recovered from the baghouse or from the spray drying absorption chamber through 6 is recycled to the mixing tank 3 through conduit 4 whereas the remaining part is recovered as a mixture of limestone and calcium sulfate via conduit 10 for industrial use or for disposal.

The process according to the invention will be further illustrated by means of the following embodiment example.

## E X A M P L E

Two test runs were carried out using a plant as the one shown in fig. 1. Said plant comprised a Niro Atomizer spray drying absorber and a Joy Manufacturing Co. pulse jet baghouse. A flue gas stream of appr. 2,000 N m$^3$/h was treated. Each test run was carried out for several days.

Test Run No. 1 was made for comparison without clay addition in the feed, whereas Test Run No. 2 was performed using the method according to the invention. Due to the absence of clay in the feed in Test Run No. 1 it was not possible in that run to fulfil the conditions of the present process as to moisture in the particles reaching the filter. In both runs the limestone used was a precipitated limestone "Polymix-S" (Faxe Kalk, Copenhagen) indicated as having a particle size below 10 μm. The water used in the process was synthetic sea water prepared by adding 18.7 g/l NaCl and 2.7 g/l $MgSO_4 \cdot 10H_2O$ to tap water.

The test conditions and the results obtained appear from the following Table.

12

# T A B L E

|  | Run No. 1 (comparison) | Run No. 2 |
|---|---|---|
| Plastic clay, based on limestone | 0% | 10% |
| SO$_2$, ppm on dry basis: | | |
| chamber $^{x)}$ inlet | 1585 | 1592 |
| baghouse outlet | 563 | 358 |
| removal | 64.5% | 77.5% |
| Temperatures (°C) of gas: | | |
| chamber inlet | 125 | 125 |
| chamber outlet | 62 | 58 |
| baghouse outlet | 63 | 64 |
| Adiabatic saturation temperature at chamber outlet | 49 | 49 |
| Stoichiometric ratio of feed limestone to SO$_2$ in raw gas | 1.45 | 1.48 |
| Moisture in particles out of | | |
| chamber | 2.5% | 7.2% |
| baghouse | 2.1% | 0.5% |

$^{x)}$ Chamber means the spray drying absorption chamber.

13

As it appears from the Table incorporation of clay in the absorbent feed and operation of the process according to the invention involved an increase of the desulfurization efficiency from 64.5% to 77.5%.

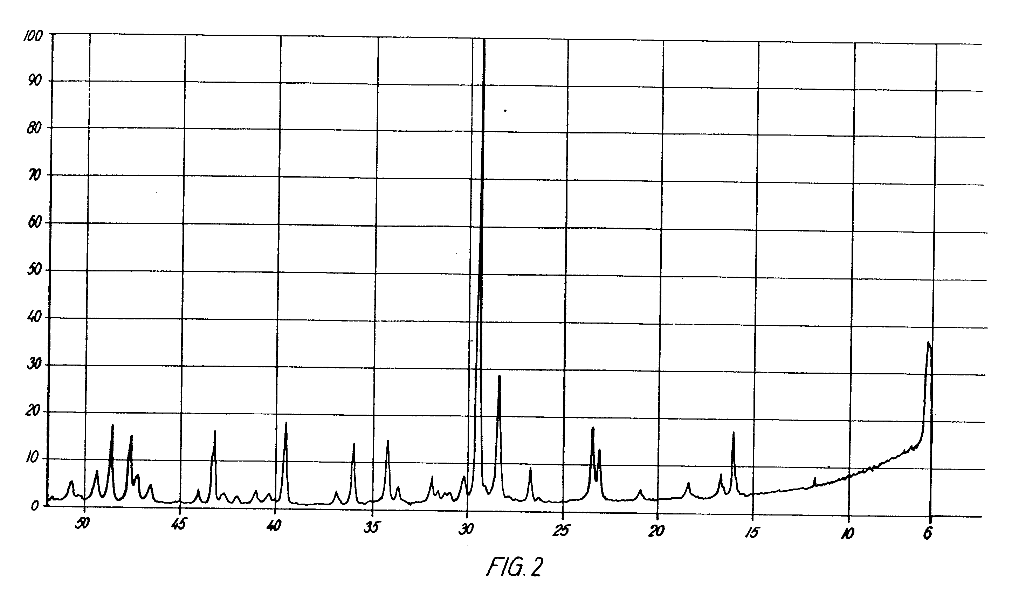

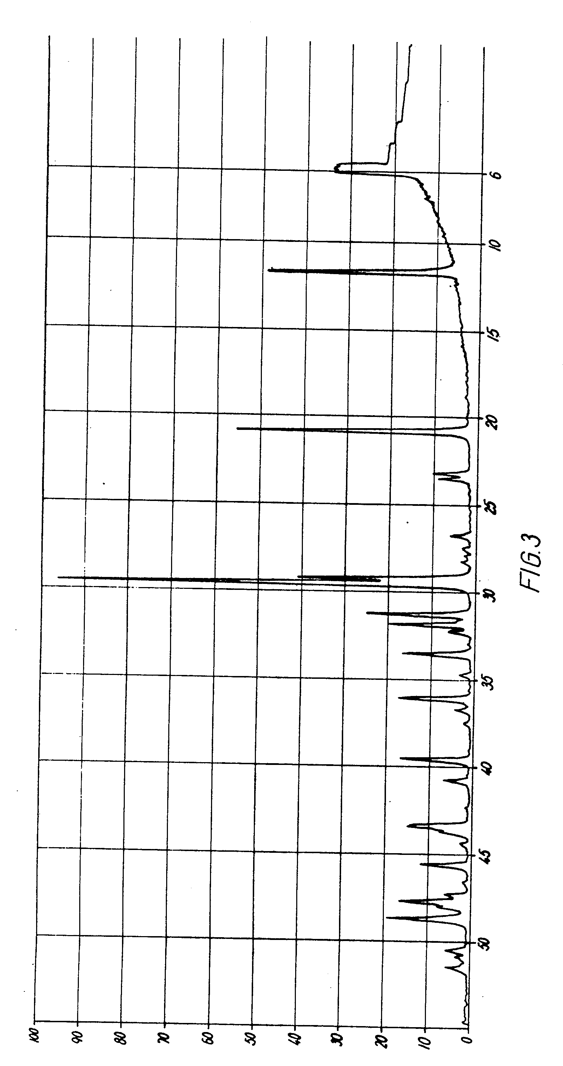

The waste material removed from the baghouse in each run (after an average residence time in the filter of several hours) was analysed by X-ray difraction. The results thereof appear from the figures 2 and 3, where fig. 2 corresponds to the waste material from Run No. 1 and fig. 3 corresponds to the waste material from Run No. 2.

Both diffractograms were taken using Cu $K_\alpha$ radiation. Interpretation of the diffractograms by means of ASTM cards indicates the presence of calcite ($CaCO_3$) (ASTM card 5-0586) and calcium sulfite hemihydrate (card 4-0588) and calcium sulfate dihydrate (card 6-0046) in the waste material from the comparison Run No. 1, whereas only calcium sulfate dihydrate and calcite but no calcium sulfite were identified in the waste materials from Run No. 2.

Therefore no further oxidation needs to be carried out of the waste product obtained by the process according to the invention.

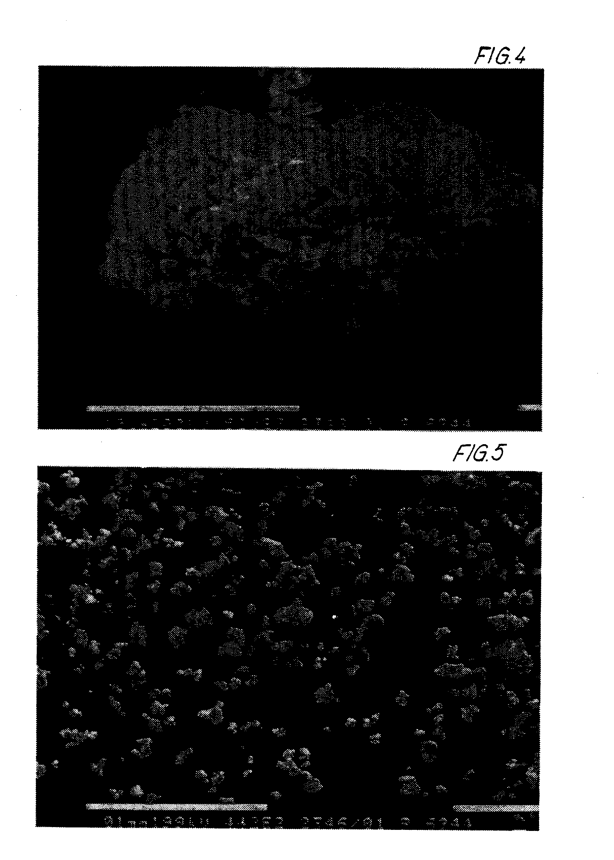

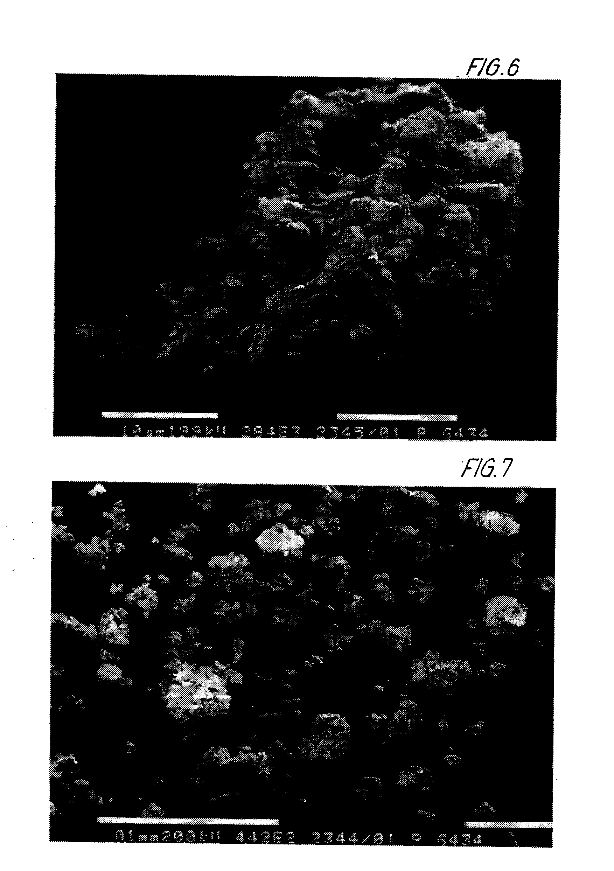

The waste materials from the two Runs were also examined by electron microscopy. Fig. 4 shows a particle of the material from Run No. 1. The white bar on the figure indicates a distance of 10 $\mu$m. Fig. 5 shows several particles of the same material, in this figure the white bar represents 100 $\mu$m.

Fig. 6 shows a typical particle of the waste material recovered from the bag house in Run No. 2. The white bar in this figure corresponds to 10 $\mu$m. It is evident that the particle is substantially larger than the one of Fig. 4 and also the particle structure seems different because the dominating component is calcium sulfate dihydrate and not calcium sulfite hemihydrate.

14

Fig. 7 shows several particles of the waste material from Run No. 2 and as in Fig. 5 the white bar corresponds to 100 μm.

By comparing Fig. 7 with Fig. 5 it is confirmed that the average particle size of the waste product from Run No. 2 is substantially larger than the particle size of the waste product from Run No. 1. This difference in particle size obtained as a result of the addition of clay is important as to the improved operational conditions obtainable by the process, as explained above.

## P A T E N T   C L A I M S

1. A spray drying absorption process for the desulfurization of a stream of hot flue gas using limestone as absorbent, including the steps of

a) preparing an aqueous feed suspension containing powdery limestone ($Ca(CO_3)$),

b) atomizing said feed suspension into the stream of hot flue gas in a spray drying absorption chamber for partial drying of the resulting atomized droplets and absorption of a portion of the sulfur dioxide in the flue gas by the limestone, thereby forming particles comprising partly reacted limestone

c) conducting the flue gas stream with a substantial part of said particles entrained therein to a filter to remove said particles from the flue gas stream and to build up a layer of said particles on the filter surface, thereby exposing them to further contact with flue gas passing through the filter,

d) intermittently removing said layer of particles from the filter surface

e) withdrawing from the filter the treated gas having a substantially reduced content of sulfur dioxide

comprising

f) incorporation of plastic clay in said aqueous feed suspension in an amount of 2-15% by weight based on limestone,

g) adjusting the amount of water in the feed suspension to ensure that said particles when reaching the filter filter have a moisture content of 3-10% by weight, and

h)    maintaining the particle layer on the filter surface for further absorption of sulfur dioxide and oxidation of sulfur compounds having the sulfur of oxidation number 4 into sulfate by an exothermic reaction, thereby increasing the temperature of the particle layer to dry the particles to a moisture content below 2% and to increase the temperature of the flue gas passing through the particle layer.

2.    The process of claim 1, wherein the outlet temperature of the gas stream leaving the spray drying absorber is 6-15°C above the adiabatic saturation temperature thereof.

3.    The process of claims 1-2 wherein at least 50 weight-% of the limestone used for preparing the feed suspension in step  a) has a particle size less than 7 μm.

4.    The process of claims 1-3, wherein an alkali or alkaline earth chloride is incorporated into the feed suspension.

5.    The process of claim 1-4, wherein lime is incorporated into the feed suspension.

6.    The process of claim 1-5, wherein a part of the particles removed from the filter surface in step d) or from the bottom of the spray drying absorption chamber is recycled by being added to the feed suspension.

FIG. I

FIG. 2

0 271 224

FIG.3

0 271 224

FIG.4

FIG.5

*FIG.6*

*FIG.7*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | EP-A-0 128 698 (A/S NIRO ATOMIZER) <br> * Figures 1,2; claims * | 1 | B 01 D 53/34 |
| D,A | | 2 | |
| | --- | | |
| Y | DERWENT JAPANESE PATENTS REPORT, vol. 77, no. 5, 4th February 1977, Chemical Engineering, page 5, abstract no. J7 7003918, Chemical Section, Derwent Publications, London, GB; "Removing sulphur oxides present in waste gas" (YOSHIZAWA LIME IND.) 12-12-1974 <br> * Abstract * | 1 | |
| | --- | | |
| A | DE-A-3 241 539 (L & C STEINMULLER GmbH) <br> * Claims; page 5, last paragraph * | 1,5,6 | |
| | --- | | |
| A | DE-A-3 121 722 (KOBE STEEL) <br> * Claims * | 1,4,5 | |
| | --- | | |
| A | DE-C- 721 024 (KOHLE- UND EISENFORSCHUNG GmbH) | 1,4,5 | **TECHNICAL FIELDS SEARCHED (Int. Cl.4)** |
| | ----- | | B 01 D 53/00 |

The present search report has been drawn up for all claims

| Place of search | Date of completion of the search | Examiner |
|---|---|---|
| THE HAGUE | 23-02-1988 | BOGAERTS M.L.M. |